# EUROPÄISCHE PATENTSCHRIFT

(11) **EP 0 738 573 B1**
(45) Veröffentlichungstag und Bekanntmachung des Hinweises auf die Patenterteilung: **16.02.2000**
(21) Anmeldenummer: 95118591.7
(22) Anmeldetag: 25.11.1995
(51) Int. Cl.: B29C 33/42, B29C 45/26, B29D 17/00

(54) **Matrize zum Abformen von Schallaufzeichnungen und Verfahren zu ihrer Herstellung**
Stamper for forming sound recordings and method of manufacturing
Matrice pour former des enregistrements sonores et procédé pour sa fabrication

(30) Priorität: 20.03.1995 DE 19510096
(43) Veröffentlichungstag der Anmeldung: 23.10.1996
(73) Patentinhaber: Balzers und Leybold Deutschland Holding Aktiengesellschaft, 63450 Hanau (DE)
(72) Erfinder: Koop, Hermann, Dr., D-30952 Ronnenberg (DE); Fritsche, Wolf-Eckhart, D-63801 Kleinostheim (DE); Hensel, Bernd, D-65760 Eschborn (DE)

(56) Entgegenhaltungen:
- EP-A- 0 386 459
- EP-A- 0 449 462
- EP-A- 0 488 239
- US-A- 4 164 754
- US-A- 4 435 343
- PATENT ABSTRACTS OF JAPAN vol. 013, no. 079 (C-571), 22.Februar 1989 & JP-A-63 266058 (SEIKO EPSON CORP), 2.November 1988,
- DATABASE WPI Week 9131 Derwent Publications Ltd., London, GB; AN 91-227151 XP002021880 & JP-A-03 146 652 (KENSEIDO KK) , 21.Juni 1991
- PATENT ABSTRACTS OF JAPAN vol. 007, no. 196 (P-219), 26.August 1983 & JP-A-58 094101 (TOKYO SHIBAURA DENKI KK), 4.Juni 1983,
- PATENT ABSTRACTS OF JAPAN vol. 013, no. 399 (C-632), 5.September 1989 & JP-A-01 142077 (TOPPAN PRINTING CO LTD), 2.Juni 1989,
- PATENT ABSTRACTS OF JAPAN vol. 014, no. 397 (C-0752), 28.August 1990 & JP-A-02 149666 (HITACHI CHEM CO LTD), 8.Juni 1990,
- DATABASE WPI Week 9519 Derwent Publications Ltd., London, GB; AN 95-142492 XP002021881 & JP-A-07 066 036 (HITACHI LTD) , 10.März 1995

## Beschreibung

Die Erfindung betrifft eine Matrize zum Abformen von Schallaufzeichnungen in Form von spiralig angeordneten Vertiefungen auf einer kreisrunden Trägerscheibe sowie das Verfahren zur Herstellung der Matrize selbst, unter Verwendung einer aus Silikatglas gebildeten Platte mit einer die Schallaufzeichnung in Form erhabener, aus einem entwickelten Photoresist gebildeten, Konturen aufweisenden Prägefläche und mit einer die Prägefläche abdeckenden ersten Schicht aus einem Metall und einer diese erste Schicht abdeckenden Schutzschicht, wobei die erste auf den Photoresist aufgebrachte Metallschicht von einem Sputtertarget abgeschieden wird und die Schutzschicht aus galvanisch abgeschiedenem Nickel gebildet ist und die Matrize von der Photoresistschicht abgezogen wird.

Bekannt sind auf die beschichtete und entwickelte Photoresistschicht bzw. auf die belichtete und entwickelte Positivlackfläche aufgesputterte Nickel-Schichten oder Silber-Schichten die mit Hilfe von galvanischen Verfahren abgeschiedenen dickeren Ni-Schichten verstärkt sind.

Bekannt ist auch ein Verfahren zur Herstellung einer Matrize zum Abformen von Schallaufzeichnungen in Form von spiralig angeordneten Vertiefungen auf einer kreisrunden Trägerscheibe (JP-A-63266058) unter Verwendung einer aus Silikatglas gebildeten Platte mit einer die Schallaufzeichnung in Form erhabener, aus einem Photoresist gebildeten, Konturen aufweisenden Prägefläche und mit einer die Prägefläche abdeckenden ersten Schicht aus einem Metall und einer diese erste Schicht abdeckenden Schutzschicht, wobei die erste auf den Photoresist aufgebrachte Metallschicht von einem Sputtertarget abgeschieden wird, das aus einer Ni-Legierung gebildet ist und die Schutzschicht aus galvanisch abgeschiedenem Nickel gebildet ist und die Matrize von der Photoresistschicht abgezogen wird.

Bekannt ist weiterhin ein Verfahren zum Herstellen von Dünnschichtschaltungen (EP-A-386 459), bei welchem ein Substrat mit einer nicht-leitenden Oberfläche gemäß einem semi-additiven Verfahren selektiv mit einer Leiterbahn aus Cu beschichtet wird, wobei die Oberfläche des Substrats mittels einer Plasmabehandlung vorgereinigt wird, danach eine haftvermittelnde Grundmetallisierung aus CuCr oder NiV ganzflächig aufgesputtert und dann selektiv mit Cu verstärkt wird, wobei schließlich ein nicht verstärkter Bereich der Grundmetallisierung weggeätzt wird.
Das Sputtertarget ist bei diesem Verfahren aus einer NiV-Legierung gebildet, wobei der Anteil der des Vanadiums 7% beträgt und die aufgebrachte Metallschicht, die eine gemeinsame Grenzfläche mit einer Photoresistschicht hat, von dieser ablösbar ist.

Ein Nachteil bei den bekannten Verfahren zur Herstellung von Matrizen ist durch die Eigenart der Photolackschichten gegeben beim Abtrennen der Matrize von der Photoresistschicht zumindest teilweise an der Matrize haften zu bleiben, was zu erheblichen Problemen bei der anschließenden Herstellung der Trägerscheiben (CD's) führt da Reste der Photoresistschicht bzw. des Haftvermittlers an der später zu gießenden Trägerscheiben haften könnten.

Aufgabe der vorliegenden Erfindung ist es deshalb, die erste Schicht so auszubilden, daß gewährleistet ist, daß die Matrize leicht von der Photoresistschicht ablösbar ist, ohne daß Haftvermittlerreste oder Reste der Photoresistschicht an der Matrize haften bleiben.

Gemäß der Erfindung wird diese Aufgabe gelöst durch eine, die Photoresistschicht auf der Glasplatte haltenden Haftvermittlerschicht, wobei das Sputtertarget zum Aufbringen der Metallschicht aus einer NiV-Legierung mit einem Anteil von Vanadium zwischen 3 und 30% gebildet ist.

In einem alternativen Herstellverfahren wird eine, die Photoresistschicht auf der Trägerscheibe haltende Haftvermittlerschicht aufgebracht, wobei das Sputtertarget zum Aufbringen der ersten Schicht aus einer, eine hohe Affinität zur Oxydbildung aufweisenden, aus Ni und diamagnetischen Metallen gebildeten Legierung besteht, wobei die Schutzschicht aus galvanisch abgeschiedenem Ni gebildet ist und die Matrize von der Photoresistschicht abgezogen wird.

Erfindungsgemäß ist die die Schallaufzeichnung aufweisende Schicht der Matrize aus einer NiV-Legierung mit einem Anteil von 3% bis 30% Vanadium gebildet, wobei eine, die erste Schicht abdeckende Schutzschicht aus Ni besteht.

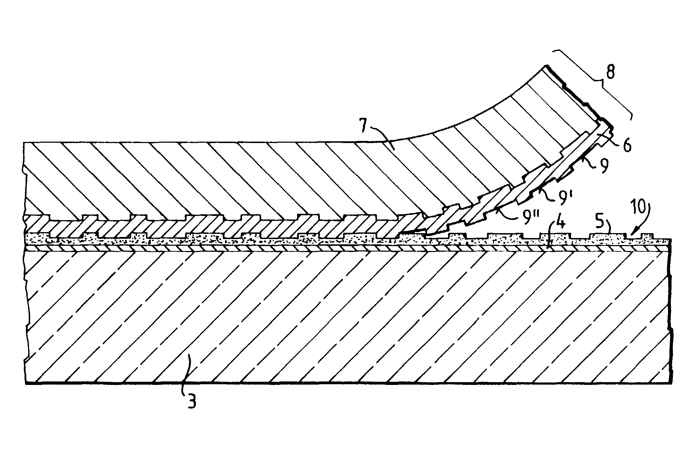

Die Erfindung läßt die verschiedensten Ausführungsmöglichkeiten zu; eine davon ist anhand der Zeichnung näher beschrieben.

Die Herstellung der Matrize (Stamper) zum Spritzgießen von Compact Discs (z. B. aus polycarbonaten) erfolgt mit Hilfe einer Glasplatte 3 auf deren eine Seitenfläche ein Haftvermittler (adhesion promotor) 4 und eine lichtempfindliche Schicht (photo resist layer) 5 aufgetragen wird (coated plate), die anschließend mit Hilfe eines Laserstrahls belichtet (exposure by laser beam) und danach entwickelt wird (developed glass master). Auf die Photoresist-Schicht 5, wird dann im Vakuum eine vergleichsweise dünne Schicht 6 aus NiV (3 % bis 30 % V) aufgesputtert (von einem Target aus einer NiV-Legierung). Anschließend wird diese NiV-Schicht 6 wesentlich verstärkt durch eine Ni-Schicht (von z. B. 300 µ) 7 die auf galvanischem Wege abgeschieden wird. Schließend wird die Matrize 8 von der Photoresist-Schicht 5 abgezogen (abgetrennt) und entweder auf das Werkzeug der Spritzgießmaschine aufgelegt oder aber es werden von der Matrize 8 (Nickel master) auf galvanischem Wege in an sich bekannte Weise, Duplikate (Tochter-Matrizen) gefertigt, die ihrerseits als Matrizen auf das Werkzeug gelegt werden können.

Ein wesentlicher Vorteil, der für die erste Metallschicht verwendeten Legierung (NiV) besteht in ihrer vergleichsweise geringeren Haftung auf der Photoresist-Schicht und darin, daß diese NiV-Legierung die Verwendung von dickwandigen Targets mit entsprechend hoher Standzeit gestattet.

## Patentansprüche

1. Verfahren zur Herstellung einer Matrize (master) (8) zum Abformen von Schallaufzeichnungen in Form von spiralig angeordneten Vertiefungen (9,9',...) auf einer kreisrunden Trägerscheibe , beispielsweise für eine compact disc, unter Verwendung einer aus Silikatglas gebildeten Platte (Glas-Master) (3) mit einer die Schallaufzeichnung in Form erhabener, aus einem Photoresist (5) gebildete, Konturen aufweisenden Prägefläche (Surface Coat) und mit einer die Prägefläche (10) abdeckenden ersten Schicht (6) aus einem Metall und einer diese erste Schicht (6) abdeckenden Schutzschicht (7), wobei die erste auf den Photoresist (5) aufgebrachte Metall-Schicht (6) von einem Sputtertarget abgeschieden wird und die Schutzschicht aus galvanisch abgeschiedenem Nickel gebildet ist und die Matrize von der Photoresist-Schicht (5) abgezogen wird, **dadurch gekennzeichnet, daß** eine, die Photoresistschicht (5) auf der Glasplatte (3) haltende Haftvermittlerschicht (4) aufgebracht wird und das Sputtertarget zum Aufbringen der ersten Schicht (6) aus einer NiV-Legierung mit einem Vanadium-Anteil zwischen 3% und 30% gebildet ist.

2. Verfahren zur Herstellung einer Matrize (master) (8) zum Abformen von Schallaufzeichnungen in Form von spiralig angeordneten Vertiefungen (9, 9',...) auf einer kreisrunden Trägerscheibe, beispielsweise einer compact disc, unter Verwendung einer aus Silikatglas gebildeten Platte (Glas-Master) (3) mit einer die Schallaufzeichnung in Form erhabener, aus einem Photoresist (5) gebildeten, Konturen aufweisenden Prägefläche (Surface Coat) und mit einer die Prägefläche (10) abdeckenden ersten Schicht (6) aus einem Metall und einer diese erste Schicht (6) abdeckenden Schutzschicht (7), wobei die erste auf den Photoresist aufgebrachte Metall-Schicht (6) von einem Sputtertarget abgeschieden wird, **dadurch gekennzeichnet, daß** eine die Photoresistschicht (5) auf der Glasplatte (3) haltende Haftvermittlerschicht (4) aufgebracht wird und das Sputtertarget zum Aufbringen der ersten Schicht (6) aus einer, eine hohe Affinität zur Oxydbildung aufweisenden, aus Ni und diamagnetischen Metallen gebildeten Legierung besteht, wobei die Schutzschicht (7) aus galvanisch abgeschiedenem Ni gebildet ist und die Matrize (8) von der Photoresistschicht (5) abgezogen wird.

3. Matrize zum Abformen von Schallaufzeichnungen in Form von spiralig angeordneten Vertiefungen (9, 9',...) auf einer kreisrunden Trägerscheibe **gekennzeichnet durch** eine, die Schallaufzeichnung aufweisende Schicht (6) aus einer NiV-Legierung mit einem Anteil von 3 % bis 30 % Vanadium und einer die erste Schicht (6) abdeckenden Schutzschicht (7) aus Ni.

## Claims

1. Process for manufacturing a matrix (master) (8) for moulding sound recordings in the form of spirally disposed depressions (9, 9', ...) on a circular carrier disc, for example for a compact disc, using a plate (glass master) (3) formed from silicate glass with a stamping face (surface coat) having the sound recording in the form of raised contours formed from a photoresist (5), and with a first coating (6) which is made of a metal and covers the stamping face (10), and a protective coating (7) which covers the said first coating (6), the first metal coating (6), which is applied to the photoresist (5), being deposited by a sputtering target, the protective coating being formed from galvanically deposited nickel and the matrix being drawn off from the coating of photoresist (5),
**characterised in that** a coating of bonding agent (4) which keeps the coating of photoresist (5) on the glass plate (3) is applied and the sputtering target for applying the first coating (6) is formed from an NiV alloy with a vanadium component of between 3% and 30%.

2. Process for manufacturing a matrix (master) (8) for moulding sound recordings in the form of spirally disposed depressions (9, 9', ...) on a circular carrier disc, for example a compact disc, using a plate (glass master) (3) formed from silicate glass with a stamping face (surface coat) having the sound recording in the form of raised contours formed from a photoresist (5), and with a first coating (6) which is made of a metal and covers the stamping face (10), and a protective coating (7) which covers the said first coating (6), the first metal coating (6), which is applied to the photoresist, being deposited by a sputtering target, **characterised in that** a coating of bonding agent (4) which keeps the coating of photoresist (5) on the glass plate (3) is applied and the sputtering target for applying the first coating (6) consists of an alloy which has a high affinity for oxide-formation and is formed from Ni and diamagnetic metals, the protective coating (7) being formed from galvanically deposited Ni and the matrix (8) being drawn off from the coating of photoresist (5) .

3. Matrix for moulding sound recordings in the form of spirally disposed depressions (9, 9', ...) on a circular carrier disc, **characterised by** a coating (6) having the sound recording and made of an NiV alloy with a vanadium component of 3% to 30% and a protective coating (7) which is made of Ni and covers the first coat (6).

## Revendications

1. Procédé pour fabriquer une matrice (master) (8) pour modeler des enregistrements acoustiques sous la forme de renfoncements (9, 9', ...) disposés en spirale, sur un disque de support circulaire, par exemple pour un disque compact, moyennant l'utilisation d'une plaque (Glas-Master) (3) formée en verre à base de silicate et comportant une surface de gaufrage (Surface Coat) possédant l'enregistrement acoustique sous la forme de contours surélevés formés d'un photoresist (5), et comportant une première couche (6), qui recouvre la surface de gaufrage (10) et est réalisée en un métal, et une couche de protection (7), qui recouvre cette première couche (6), selon lequel la première couche métallique (6) appliquée sur le photoresist (5) est déposée à partir d'une cible de pulvérisation, et la couche de protection est formée par du nickel déposé galvaniquement, et on retire la matrice de la couche de photoresist (5), caractérisé en ce qu'on dépose une couche d'adhésif (4), qui retient la couche de photoresist (5) sur la plaque de verre (3), et la cible de pulvérisation pour le dépôt de la première couche (6) est formée par un alliage NiV possédant un pourcentage de vanadium compris entre 3 % et 30 %.

2. Procédé pour fabriquer une matrice (master) (8) pour modeler des enregistrements acoustiques sous la forme de renfoncements (9, 9', ...) disposés en spirale, sur un disque de support circulaire, par exemple pour un disque compact, moyennant l'utilisation d'une plaque (Glas-Master) (3) formée en verre à base de silicate et comportant une surface de gaufrage (Surface Coat) possédant l'enregistrement acoustique sous la forme de contours surélevés formés par un photoresist (5), et comportant une première couche (6), qui recouvre la surface de gaufrage (10) et est réalisée en un métal, et une couche de protection (7), qui recouvre cette première couche (6), selon lequel la première couche métallique (6) appliquée sur le photoresist (5) est déposée à partir d'une cible de pulvérisation, caractérisé en ce qu'on dépose une couche d'adhésif (4) retenant la couche de photoresist (5) sur la plaque de verre et que la cible de pulvérisation pour le dépôt de la première couche (6) est constituée par un alliage présentant une grande affinité pour la formation d'oxyde et formé par du Ni et par des métaux diamagnétiques, et selon lequel la couche de protection (7) est formée à partir de Ni déposé galvaniquement, et on retire la matrice (8) de la couche de photoresist (5).

3. Matrice pour modeler des enregistrements acoustiques sous la forme de renfoncements (9, 9', ...) disposés en spirale sur un disque de support circulaire, caractérisée par une couche (6) contenant l'enregistrement acoustique, constituée par un alliage de NiV possédant un pourcentage de vanadium compris en 3 % et 30 %, et par une couche de protection (7) en Ni recouvrant la première couche (6).
